# EUROPEAN PATENT APPLICATION

(11) **EP 4 674 886 A1**
(43) Date of publication of application: **07.01.2026**
(21) Application number: 24763886.9
(22) Date of filing: 27.02.2024
(51) Int. Cl.: C08G 63/16, C08L 101/16

(54) **OCEAN-BIODEGRADABLE POLYESTER RESIN AND METHOD FOR PRODUCING SAME**

(30) Priority: 02.03.2023 JP 2023031496
(71) Applicant: Nippon Shokubai Co., Ltd., Osaka-shi, Osaka 541-0043 (JP); RIKEN, Wako-shi, Saitama 351-0198 (JP)
(72) Inventor: IMADA, Motosuke, Suita-shi, Osaka 564-0034 (JP); SATO, Kaoko, Suita-shi, Osaka 564-0034 (JP); TAKENAKA, Yasumasa, Wako-shi, Saitama 351-0198 (JP); KUMAGAI, Sumito, Wako-shi, Saitama 351-0198 (JP); HAYASHI, Senri, Wako-shi, Saitama 351-0198 (JP); KATSURAGI, Atsushi, Wako-shi, Saitama 351-0198 (JP)
(74) Representative: Müller-Boré & Partner Patentanwälte PartG mbB
(86) International application number: PCT/JP2024/006966
(87) International publication number: WO 2024/181407

(57) **Abstract**

The present invention provides a novel polyester-based resin exhibiting biodegradability in seawater and a method for producing the polyester-based resin, and the present invention provides a marine biodegradable polyester-based resin containing a polymer including a structural unit derived from succinic acid, a structural unit derived from a dicarboxylic acid having 7 or more carbons, and a structural unit derived from at least one aliphatic diol selected from the group consisting of ethylene glycol, 1,2-propanediol, and 1,3-propanediol.

## Description

### Technical Field

The present invention relates to a marine biodegradable polyester-based resin and a method for producing the marine biodegradable polyester-based resin.

### Background Art

Although plastics have high durability and are used in a wide range of fields, the plastics are hardly degraded in a natural environment, and therefore environmental pollution due to plastic waste has been a problem. As a technique for improving environmental load of plastic waste, biodegradable plastics that are finally degraded into water and carbon dioxide by the action of microorganisms or the like have been developed, and polybutylene succinate (PBS), polyethylene succinate (PES), and the like are known.

As described in Non-Patent Literature 1, polyethylene succinate or polybutylene succinate is degraded by microorganisms in soil; however, only about from 2 to 3% of the polymer is biodegraded when it flows out to the sea, and marine pollution due to plastic waste flowing out to the sea has been a problem.

In recent years, plastics having excellent biodegradability in the ocean (hereinafter referred to as marine biodegradable plastics) have been studied.

For example, Patent Document 1 discloses a biodegradable resin composition having excellent biodegradability in the ocean and moldability, the composition being produced by blending a specific amount of a protein in a specific polyester-based resin.

### Citation List

### Patent Document

Patent Document 1: WO 2021/241712

### Non-Patent Literature

Non-Patent Literature 1: Ken-ichi Kasuya et al., "Biodegradabilities of various aliphatic polyesters in natural waters", Elsevier Science Limited, Polymer. Degradation and Stability. 59 (1998) 327-332

### Summary of Invention

### Technical Problem

The present invention has been made in view of the above circumstances, and an object of the present invention is to provide a novel polyester-based resin exhibiting biodegradability in seawater, and a method for producing the polyester-based resin.

### Solution to Problem

The marine biodegradable polyester-based resin of the present invention which can solve the above problems has the following constitution.
[1] A marine biodegradable polyester-based resin containing a polymer including a structural unit (A) derived from succinic acid;
   a structural unit (B) derived from a dicarboxylic acid having 7 or more carbons; and
   a structural unit (C) derived from at least one aliphatic diol selected from the group consisting of ethylene glycol, 1,2-propanediol, and 1,3-propanediol.
[2] The marine biodegradable polyester-based resin according to [1], wherein the dicarboxylic acid having 7 or more carbons is at least one selected from the group consisting of suberic acid, sebacic acid, and dodecanedioic acid.
[3] The marine biodegradable polyester-based resin according to [1] or [2], wherein, in the polymer, a molar ratio (C-1/C) of a structural unit derived from the ethylene glycol to the structural unit (C) is 90/100 or more.
[4] The marine biodegradable polyester-based resin according to any of [1] to [3], wherein, in the polymer, a molar ratio (B/[A + B + C]) of the structural unit (B) to a total of the structural unit (A), the structural unit (B), and the structural unit (C) is 2/100 or more.
[5] The marine biodegradable polyester-based resin according to any of [1] to [4], wherein a heat of fusion of the marine biodegradable polyester-based resin measured in accordance with ASTM D3418 is less than 60 J/g.
[6] The marine biodegradable polyester-based resin according to any of [1] to [5], wherein the structural unit (A) is randomly introduced in the polymer.
[7] The marine biodegradable polyester-based resin according to any of [1] to [6], wherein at least one selected from the group consisting of the succinic acid, the dicarboxylic acid having 7 or more carbons, and the aliphatic diol is derived from a plant.
   The method for producing the polyester-based resin of the present invention has the following constitution.
[8] A method for producing a marine biodegradable polyester-based resin, the method including polycondensation of succinic acid,
   a dicarboxylic acid having 7 or more carbons, and
   at least one aliphatic diol selected from the group consisting of ethylene glycol, 1,2-propanediol, and 1,3-propanediol.

### Advantageous Effects of Invention

According to the present invention, it is possible to provide a polyester-based resin exhibiting biodegradability in the ocean and a method for producing the polyester-based resin.

### Description of Embodiments

As a result of intensive studies to solve the above problems, the present inventors have found that a polyester-based resin obtained by copolymerizing succinic acid and a predetermined aliphatic diol with a dicarboxylic acid having 7 or more carbons has decreased crystallinity and increased amorphous phased content due to the dicarboxylic acid having 7 or more carbons, and thus has significantly improved marine biodegradability, and have completed the present invention.

The marine biodegradable polyester-based resin of the present invention contains a specific polymer (polycondensate) (hereinafter may be referred to as marine biodegradable polymer). The polymer includes a dicarboxylic acid unit and a diol unit, and may optionally contain a trivalent or higher valent carboxylic acid and a trivalent or higher valent diol. The dicarboxylic acid unit includes a structural unit derived from succinic acid (hereinafter may be referred to as succinic acid unit (A)) and a structural unit derived from a dicarboxylic acid having 7 or more carbons (hereinafter may be referred to as dicarboxylic acid unit (B) having 7 or more carbons), and the diol unit includes a structural unit derived from at least one aliphatic diol selected from the group consisting of ethylene glycol, 1,2-propanediol, and 1,3-propanediol (hereinafter may be referred to as predetermined aliphatic diol unit (C), ethylene glycol unit, and propanediol unit, respectively).

### Marine biodegradable polyester-based resin

Hereinafter, the constitution of the above-mentioned marine biodegradable polymer, which is a main component constituting the marine biodegradable polyester-based resin of the present invention, will be described. The marine biodegradable polymer is a polymer in which a dicarboxylic acid unit (B) having 7 or more carbons is incorporated in a polyester skeleton composed of a succinic acid unit (A) and a predetermined aliphatic diol unit (C).

### Dicarboxylic acid unit

The dicarboxylic acid unit contains the succinic acid unit (A) and the dicarboxylic acid unit (B) having 7 or more carbons.

### Succinic acid unit (A)

The succinic acid unit (A) forms a polyalkylene succinate skeleton with the predetermined aliphatic diol unit (C) and exhibits biodegradability.

From the viewpoint of exhibiting excellent marine biodegradability while having sufficient durability, the molar ratio of the succinic acid unit (A) to the total (A + B) of the succinic acid unit (A) and the predetermined aliphatic diol unit contained in the marine biodegradable polymer (i.e., A/[A + B]; the content ratio of the unit (A) (mol) to 100 mol of the total of the units (A) and (B) of the polymer) is preferably 50/100 or more, more preferably 60/100 or more, still more preferably 70/100 or more, and preferably 95/100 or less, more preferably 90/100 or less, still more preferably 85/100 or less. That is, the molar ratio is preferably from 50/100 to 95/100, more preferably from 60/100 to 90/100, and still more preferably from 70/100 to 85/100. A combination of the upper and lower limits may be appropriately changed (hereinafter the same applies to numerical ranges).

### Dicarboxylic acid unit (B) having 7 or more carbons

When the dicarboxylic acid unit (B) having 7 or more carbons is contained, the crystallinity decreases and the amorphous phase increases, so that an effect of promoting biodegradation in seawater is obtained. The carbon number of the dicarboxylic acid unit (B) having 7 or more carbons is preferably 8 or more and 12 or less. The dicarboxylic acid having 7 or more carbons is preferably a linear dicarboxylic acid. More preferred are suberic acid, sebacic acid, and dodecanedioic acid. One type of dicarboxylic acid having 7 or more carbons may be used, or two or more types thereof may be used in combination.

In the marine biodegradable polymer, the dicarboxylic acid unit (B) having 7 or more carbons may be randomly introduced, or may be introduced in a block, alternating, or graft manner. When the dicarboxylic acid unit having 7 or more carbons is randomly introduced, the marine biodegradability is improved, which is preferable.

As the amount of the dicarboxylic acid unit (B) having 7 or more carbons increases, the marine biodegradability is improved. However, when the amount of the dicarboxylic acid unit (B) is too large, the strength of the marine biodegradable polyester-based resin decreases, and moldability may not be maintained.

The total amount of the succinic acid unit (A) and the dicarboxylic acid unit (B) having 7 or more carbons is preferably 80 parts by mass or more, more preferably 90 parts by mass or more, and still more preferably 100 parts by mass per 100 parts by mass of the dicarboxylic acid units contained in the marine biodegradable polymer.

The larger the amount of the succinic acid unit (A) and the dicarboxylic acid unit (B) having 7 or more carbons, the better the marine biodegradability.

A dicarboxylic acid unit (hereinafter may be referred to as an additional dicarboxylic acid unit (D)) other than the succinic acid unit (A) and the dicarboxylic acid unit (B) having 7 or more carbons may be contained as a balance of 100 parts by mass of the dicarboxylic acid units.

As the additional dicarboxylic acid unit (D), for example, a structural unit derived from an aliphatic dicarboxylic acid such as a chain aliphatic dicarboxylic acid such as oxalic acid, malonic acid, or glutaric acid, or a cyclic aliphatic dicarboxylic acid such as cyclohexanedicarboxylic acid; or a structural unit derived from an aromatic dicarboxylic acid such as terephthalic acid or furandicarboxylic acid (preferably a structural unit derived from an aliphatic dicarboxylic acid, more preferably a structural unit derived from a chain aliphatic dicarboxylic acid) may be included.

### Diol unit

### Predetermined aliphatic diol unit (C)

The predetermined aliphatic diol is at least one selected from the group consisting of ethylene glycol, 1,2-propanediol, and 1,3-propanediol (hereinafter may referred to as ethylene glycol/1,2-propanediol/1,3-propanediol), and is preferably ethylene glycol.

The molar ratio (C-1/C) of a constituent unit (C-1) derived from ethylene glycol to the predetermined aliphatic diol unit (C) is preferably 90/100 or more, more preferably 95/100 or more, and still more preferably 100/100.

The predetermined aliphatic diol unit (C), preferably a structural unit derived from ethylene glycol/1,2-propanediol/1,3-propanediol (when used in combination, the total thereof) is preferably 90 parts by mass or more, more preferably 95 parts by mass or more, and still more preferably 100 parts by mass per 100 parts by mass of the diol units contained in the marine biodegradable polymer. The larger the amount of the structural unit derived from ethylene glycol/1,2-propanediol/1,3-propanediol, preferably ethylene glycol, the better the marine biodegradability.

The amount of the structural unit derived from butanediol is preferably 50 parts by mass or less, and more preferably 0 parts by mass per 100 parts by mass of the diol units contained in the marine biodegradable polymer.

The marine biodegradable polymer of the present invention may include a diol unit (hereinafter may be referred to as an additional diol unit (E)) other than the predetermined aliphatic diol unit (C) as a balance of 100 parts by mass of the diol units.

Examples of the additional diol unit (E) include structural units derived from diethylene glycol, triethylene glycol, polyethylene glycol, dipropylene glycol, tripropylene glycol, polypropylene glycol, 1,2-butanediol, 1,3-butanediol, 2,3-butanediol, 1,4-butanediol, and hexanediol.

In the marine biodegradable polymer, the amount of the diol unit is substantially balanced with the amount of the dicarboxylic acid unit, and is, for example, from 70 to 130 mol%, preferably from 80 to 120 mol%, and more preferably from 90 to 110 mol%, per 100 mol% of the total of the dicarboxylic acid units.

In the marine biodegradable polymer, the molar ratio (B/[A + B + C]) of the dicarboxylic acid unit (B) having 7 or more carbons to the total of the succinic acid unit (A), the dicarboxylic acid unit (B) having 7 or more carbons, and the predetermined aliphatic diol unit (C) is preferably 2/100 or more, more preferably 5/100 or more, still more preferably 8/100 or more, and preferably 70/100 or less, more preferably 60/100 or less, still more preferably 50/100 or less. That is, the molar ratio is preferably from 2/100 to 70/100, more preferably from 5/100 to 60/100, and still more preferably from 8/100 to 50/100.

The total amount of the dicarboxylic acid units (i.e., the succinic acid unit (A) and the dicarboxylic acid unit (B) having 7 or more carbons) and the diol unit (i.e., the predetermined aliphatic diol unit (C)) of the present invention is preferably 90 mass% or more, more preferably 95 mass% or more, still more preferably 98 mass% or more, and even more preferably 100 mass% per 100 mass% of the marine biodegradable polymer. The balance may contain a structural unit (hereinafter may be referred to as additional unit (F)) other than the units (A) to (C). Examples of the additional unit (F) include, but are not limited to, structural units derived from a trivalent or higher valent carboxylic acid (e.g., aconitic acid), a trivalent or higher valent alcohol (e.g., glycerin), and the like, in addition to the additional dicarboxylic acid unit (D) and the additional diol unit (E). As the contents of the units (A) to (C) increase, excellent marine biodegradability is achieved.

### Weight average molecular weight (Mw)

It is also a preferred embodiment that the weight average molecular weight of the marine biodegradable polymer of the present invention is in a predetermined range in consideration of physical properties. As the weight average molecular weight is higher, the strength of the marine biodegradable polyester-based resin containing the marine biodegradable polymer of the present invention is improved. The marine biodegradable polymer of the present invention may be subjected to a chain extension reaction using an isocyanate compound such as hexamethylene diisocyanate to increase the weight average molecular weight.

The weight average molecular weight is preferably 10000 or more, more preferably 20000 or more, still more preferably 30000 or more, and still more preferably 40000 or more.

The biodegradable polymer of the present invention can also have a weight average molecular weight of 1000000 or more. The upper limit of the weight average molecular weight is not particularly limited, and is, for example, 10000000 or less.

The upper limit of the weight average molecular weight of the biodegradable polymer may be determined in consideration of the moldability of a biodegradable polyester amide resin.

### Heat of fusion (ΔHm)

In the marine biodegradable polymer of the present invention, good marine biodegradability is achieved when the heat of fusion is small, provided that the marine biodegradable polymer contains the dicarboxylic acid unit (B) having 7 or more carbons. Meanwhile, when the heat of fusion is too small, the durability of the marine biodegradable polyester-based resin may be deteriorated.

In consideration of the durability and marine biodegradability of the marine biodegradable polyester-based resin, the heat of fusion is preferably 60 J/g or less, more preferably 50 J/g or less, and still more preferably 45 J/g or less.

### Melting point (Tm)

When the melting point of the marine biodegradable polymer of the present invention is controlled, moldability during processing is secured, and thermal deformation during use is suppressed.

The melting point is preferably 30°C or higher, more preferably 35°C or higher, and still more preferably 40°C or higher.

The aforementioned marine biodegradable polymer is a main constituent component of the marine biodegradable polyester-based resin of the present invention, and the marine biodegradable polyester-based resin may optionally contain an additional component other than the marine biodegradable polymer. The amount of the marine biodegradable polymer is preferably 50 mass% or more, more preferably 70 mass% or more, still more preferably 90 mass% or more, even more preferably 95 mass% or more, and most preferably 100 mass% per 100 mass% of the marine biodegradable polyester-based resin. The higher the proportion of the marine biodegradable polymer, the better the marine biodegradability.

Examples of the additional component other than the marine biodegradable polymer include polymers other than the marine biodegradable polymer, preferably polymers having biodegradability such as polyhydroxyalkanoic acid, polyethylene succinate, and polybutylene succinate; and additives such as pigments, dyes, heat stabilizers, antioxidants, weathering agents, lubricants, antistatic agents, fillers, reinforcing agents, flame retardants, plasticizers, and clays.

The marine biodegradability according to the present invention means that the polyester-based resin is degraded into low molecules under a seawater environment and finally degraded into water and carbon dioxide.

Being excellent in marine biodegradability means having biodegradability of preferably 2% or more, more preferably 15% or more, still more preferably 25% or more, and even more preferably 35% or more within 10 days in an ocean environment.

Alternatively, the biodegradability may be preferably 4% or more, more preferably 40% or more, still more preferably 50% or more, and even more preferably 60% or more within 20 days.

Alternatively, the biodegradability may be preferably 6% or more, more preferably 50% or more, and still more preferably 60% or more within 30 days.

In the present invention, the excellent marine biodegradability may be exhibited in any of 10 days, 20 days, and 30 days.

Hereinafter, a method for producing the marine biodegradable polymer of the present invention will be described.

The marine biodegradable polymer of the present invention can be produced by polycondensation of raw material monomers.

The raw material monomers are succinic acid (a) and a dicarboxylic acid (b) having 7 or more carbons (hereinafter may be collectively referred to as dicarboxylic acid component); and at least one aliphatic diol (hereinafter may be referred to as predetermined aliphatic diol component (c)) selected from the group consisting of ethylene glycol, 1,2-propanediol, and 1,3-propanediol.

The succinic acid (a) may be succinic acid or a succinic acid derivative, and examples of the succinic acid derivative include succinic acid esters such as dimethyl succinate and diethyl succinate, and succinic anhydride. One type of these may be used, or two or more types thereof may be used in combination.

The dicarboxylic acid (b) having 7 or more carbons may be a linear dicarboxylic acid having 7 or more carbons, preferably 8 or more and 12 or less carbons, and a derivative thereof, and is preferably at least one selected from the group consisting of suberic acid, sebacic acid, and dodecanedioic acid.

The predetermined aliphatic diol component (c) is at least one selected from the group consisting of ethylene glycol, 1,2-propanediol, and 1,3-propanediol, and is preferably ethylene glycol.

The succinic acid, the dicarboxylic acid having 7 or more carbons, and the predetermined aliphatic diol may be derived from fossil fuels, are preferably derived from plants, and may be a mixture of these in any proportions. Any one or more of the succinic acid, the dicarboxylic acid having 7 or more carbons, and the predetermined aliphatic diol are preferably derived from a plant. More preferably, two or more of them are derived from a plant, and still more preferably, all of them are derived from a plant.

In the raw material monomers, the molar ratio (c/[a + b]) of the predetermined aliphatic diol component (c) (when two or more types are used in combination, the total thereof) to the total of the succinic acid (a) and the dicarboxylic acid (b) having 7 or more carbons is preferably from 80/100 to 120/100, and more preferably from 90/100 to 105/100.

The amount of the aliphatic diol component may be increased in consideration of distillation of the aliphatic diol component during the reaction. However, when the amount of the aliphatic diol component is too large, the recovery amount of the aliphatic diol component increases.

The molar ratio (a:b) of the dicarboxylic acid (b) having 7 or more carbons (when two or more types are used in combination, the total amount thereof) to the succinic acid (a) is preferably from 0.95:0.05 to 0.50:0.50.

In order to improve the marine biodegradability, it is desirable to increase the amount of the dicarboxylic acid (b) having 7 or more carbons; however, when the amount of the dicarboxylic acid (b) is too large, the physical properties, such as strength, of the polyester of the present invention may be deteriorated.

In the present invention, only the raw material monomers described above may be used as the raw material; however, if necessary, the aforementioned additional component may be contained so as to have a desired composition. The amount of the additional component is desirably within such a range that the marine biodegradability is not inhibited, and is preferably 10 parts by mass or less, more preferably 5 parts by mass or less, and still more preferably 0 parts by mass per 100 parts by mass of the raw material monomers. In consideration of the marine biodegradability, the additional component may not be contained.

Examples of the additional component include those described in the marine biodegradable polymer. The additional component may be charged at an appropriate time although the description thereof will be omitted below.

The dicarboxylic acid component and the predetermined aliphatic diol component, which are the raw material monomers, are mixed and polycondensed to produce the marine biodegradable polymer of the present invention.

In the present invention, in order to increase the molecular weight of the marine biodegradable polymer, it is preferable that the dicarboxylic acid component and the aliphatic diol component are subjected to an esterification reaction to prepare a prepolymer, and then the prepolymer is further subjected to an esterification reaction by heating in a reduced-pressure environment to increase a degree of polymerization. The melting point, heat of fusion, weight average molecular weight, and the like of the marine biodegradable polymer can be adjusted by changing the proportions of the raw material monomers or changing polycondensation conditions.

The raw material monomers are subjected to the esterification reaction to form a prepolymer having a hydroxy group at the terminal. The prepolymer is preferably reacted under the following conditions.

The reaction temperature of the prepolymer synthesis reaction may be set to a temperature sufficient for the progress of the esterification reaction, and is, for example, preferably 150°C or higher, more preferably 180°C or higher, and preferably 300°C or lower, more preferably 250°C or lower. That is, the reaction temperature is preferably from 150°C to 300°C, and more preferably from 180°C to 250°C.

When the reaction temperature is too low, the reaction time becomes long, and accordingly, an unfavorable reaction may occur. When the reaction temperature is too high, the raw material monomers such as an aliphatic diol or a produced prepolymer may be degraded.

The reaction time may be a time required for producing the prepolymer in consideration of the reaction temperature and the like, and is, for example, preferably from 0.5 to 10 hours and more preferably from 1 to 5 hours.

An atmosphere during the reaction is, for example, preferably an inert gas atmosphere such as nitrogen or argon, and more preferably a nitrogen atmosphere.

The reaction may be started at atmospheric pressure, and then the pressure may be reduced. From the viewpoint of suppressing volatilization of a low-molecular-weight raw material monomer, it is preferable that the pressure is set to atmospheric pressure at the start of the reaction, and then the pressure is reduced from the viewpoint of preventing scattering of a monomer due to high temperature. In the pressure reduction, the pressure may be reduced stepwise or continuously. The reduced pressure is preferably 1 kPa or less, and more preferably 0.1 kPa or less.

In the present invention, the raw material monomers are mixed, then the temperature is increased to a predetermined temperature at normal pressure, the mixture is stirred for a predetermined time, and pressure reduction may be started after an esterification rate (= outflow rate of water = actual outflow amount of water/theoretical outflow amount of water) reaches from about 30 to 70%. It is also preferable to reduce the pressure in a system as the esterification rate increases. The esterification is performed at the above temperature to form a prepolymer.

In the present invention, any known catalyst may be used for the esterification reaction. Examples of the catalyst include an organometallic compound, an organic acid salt, an organic alkoxide, a metal oxide, a metal hydroxide, a carbonate, a phosphate, a sulfate, a nitrate, and a chloride containing at least one selected from the group consisting of titanium, germanium, zinc, iron, manganese, cobalt, zirconium, hafnium, vanadium, iridium, lanthanum, cerium, lithium, calcium, magnesium, tin, barium, nickel, and antimony. These catalysts may be used alone or in combination of two or more types as appropriate. Preferred is titanium(IV) isopropoxide, manganese diacetate, antimony oxide, dibutyltin diacetate, zinc chloride, or a combination of these, and more preferred is titanium(IV) isopropoxide.

The catalyst may be added in a necessary amount, and may be present in an amount of, for example, preferably 10 ppm or more, more preferably 50 ppm or more, and preferably 5000 ppm or less, more preferably 1000 ppm or less relative to the total amount of charged monomers. That is, the amount of the catalyst is preferably from 10 ppm to 5000 ppm, and more preferably from 50 ppm to 1000 ppm. When the amount of the catalyst is increased, an effect of promoting the esterification of the raw material monomers is achieved. Meanwhile, when the amount of the catalyst is too large, the resulting marine biodegradable polymer may have poor color tone or poor heat resistance.

After the esterification reaction is completed, the obtained prepolymers are further subjected to a transesterification reaction to promote the increase in molecular weight, so that a marine biodegradable polymer having the aforementioned weight average molecular weight is produced.

The conditions for the transesterification reaction may be set to conditions sufficient for the progress of an increase in molecular weight.

The reaction temperature is, for example, preferably 180°C or higher, more preferably 200°C or higher, and preferably 300°C or lower, more preferably 250°C or lower. That is, the reaction temperature is preferably from 180°C to 300°C, and more preferably from 200°C to 250°C.

The reaction time is, for example, preferably from 1 to 10 hours, and more preferably from 2 to 7 hours.

The atmosphere during the reaction is, for example, preferably an inert gas atmosphere, and more preferably a nitrogen atmosphere.

The reaction is preferably carried out under reduced pressure, and the pressure may be adjusted in accordance with the progress of the reaction. The pressure is, for example, preferably 0.5 kPa or less, and more preferably 0.1 kPa or less.

The aforementioned catalyst may be used in the transesterification reaction. The amount of the catalyst used is also exemplified in the above range.

The marine biodegradable polymer of the present invention may be subjected to a chain extension reaction using an isocyanate compound such as hexamethylene diisocyanate to further increase the molecular weight.

The produced marine biodegradable polymer is a main constituent component of the marine biodegradable polyester-based resin of the present invention, and, as described above, an additional component other than the marine biodegradable polymer may be added to the marine biodegradable polyester-based resin as necessary. Examples of the content of the marine biodegradable polymer and the additional component are as described above.

The marine biodegradable polyester-based resin of the present invention is suitable for films, sheets, fibers, foams, fine particles, and other molded articles. For example, the marine biodegradable polyester-based resin of the present invention is suitable for various industrial applications such as waste bags, agricultural films, containers for cosmetics, detergents, and the like, fishing lines, fishing nets, ropes, food packaging materials, non-woven fabrics, agricultural materials (coating material of seed and fertilizer), scrubs, and cosmetic additives. In particular, the biodegradable polyester-based resin of the present invention has excellent gas barrier properties against oxygen, and therefore is suitable for an antioxidant film (gas barrier film) for contents such as foods and pharmaceuticals.

The aforementioned molded article and the like can be produced based on various known production methods. For example, any known film production method can be applied as a method for producing a gas barrier film using the marine biodegradable polyester-based resin of the present invention as a raw material.

The marine biodegradable polyester-based resin of the present invention is biodegraded not only by marine biodegradability but also by microorganisms in normal soil. Therefore, the marine biodegradable polyester-based resin of the present invention can also be buried in soil as household waste or industrial waste.

The present application claims the benefit of priority based on JP 2023-031496 filed on March 2, 2023. The entire content of the specification of JP 2023-031496 filed on March 2, 2023 is incorporated herein by reference.

### Examples

Hereinafter, the present invention will be described more specifically with reference to Examples, but it should be understood that the present invention is not limited by the following Examples and all modifications that may be made in the scope of the descriptions above and below are also included in the technical scope of the present invention.

### Example 1

In a separable flask reaction vessel (volume: 0.2 L) equipped with a fractionating condenser, a stirrer, a nitrogen inlet, a sampling port, a heater, and a discharge port for decompression, 24.80 g of succinic acid (SA), 20.73 g of dodecanedioic acid (DDDA), and 19.55 g of ethylene glycol (EG) were charged as raw material monomers, a mechanical stirrer was set, and then the inside of the system was purged with nitrogen.

Subsequently, the inside of the system was stirred at normal pressure under a nitrogen stream, and the temperature of the inside of the system was increased to 200°C using an aluminum block heater, followed by stirring at the temperature for 1 hour. The temperature was further increased to 230°C, and the mixture was stirred at the temperature for 1 hour. Thereafter, pressure reduction was started, and the pressure in the system was gradually reduced to 0.1 kPa (= 1 mbar) or less, followed by stirring at 230°C for 1 hour. Then, 42.6 mg of a Ti(OiPr)₄ catalyst was charged into the reaction vessel, and a reaction was further performed at 230°C for 5 hours at 0.1 kPa or less to produce a polymer having a high molecular weight (yield: 79%). The polymer was used as a polyester-based resin. The produced polyester-based resin had a weight average molecular weight Mw of 67700, a melting point of 44°C, and an enthalpy of fusion of 42 J/g.

### Example 2

A polyester-based resin was produced in the same manner as in Example 1 except that the raw material monomers were changed to 24.80 g of succinic acid (SA), 18.20 g of sebacic acid (SebA), and 19.55 g of ethylene glycol (EG). The produced polyester-based resin (yield: 83%) had a weight average molecular weight Mw of 62400, a melting point of 47°C, and an enthalpy of fusion of 29 J/g.

### Example 3

A polyester-based resin was produced in the same manner as in Example 1 except that the raw material monomers were changed to 24.80 g of succinic acid (SA), 15.68 g of suberic acid (SubA), and 19.55 g of ethylene glycol (EG). The produced polyester-based resin (yield: 82%) had a weight average molecular weight Mw of 55800, a melting point of 49°C, and an enthalpy of fusion of 31 J/g.

### Example 4

A polyester-based resin was produced in the same manner as in Example 1 except that the raw material monomers were changed to 30.11 g of succinic acid (SA), 10.36 g of dodecanedioic acid (DDDA), and 19.55 g of ethylene glycol (EG). The produced polyester-based resin (yield: 80%) had a weight average molecular weight Mw of 56000, a melting point of 73°C, and an enthalpy of fusion of 41 J/g.

### Example 5

A polyester-based resin was produced in the same manner as in Example 1 except that the raw material monomers were changed to 30.11 g of succinic acid (SA), 9.10 g of sebacic acid (SebA), and 19.55 g of ethylene glycol (EG). The produced polyester-based resin (yield: 78%) had a weight average molecular weight Mw of 62500, a melting point of 72°C, and an enthalpy of fusion of 43 J/g.

### Example 6

A polyester-based resin was produced in the same manner as in Example 1 except that the raw material monomers were changed to 30.11 g of succinic acid (SA), 3.03 g of sebacic acid (SebA), and 19.55 g of ethylene glycol (EG). The produced polyester-based resin (yield: 75%) had a weight average molecular weight Mw of 70700, a melting point of 99°C, and an enthalpy of fusion of 59 J/g.

### Comparative Example 1

A polyethylene succinate was produced in the same manner as in Example 1 except that the raw material monomers were changed to 35.43 g of succinic acid (SA), 19.55 g of ethylene glycol (EG), and 4.3 mg of a catalyst. The produced polyethylene succinate (yield: 87%) had a weight average molecular weight Mw of 50600, a melting point of 99°C, and an enthalpy of fusion of 68 J/g.

### Comparative Example 2

A polybutylene succinate was produced in the same manner as in Example 1 except that the raw material monomers were changed to 35.43 g of succinic acid (SA), 28.39 g of 1,4-butanediol (1,4-BD), and 4.3 mg of a catalyst. The produced polybutylene succinate (yield: 85%) had a weight average molecular weight Mw of 61000, a melting point of 112°C, and an enthalpy of fusion of 65 J/g.

### Comparative Example 3

A polyester-based resin was produced in the same manner as in Example 1 except that the raw material monomers were changed to 30.11 g of succinic acid (SA), 6.58 g of adipic acid (AdA), and 19.55 g of ethylene glycol (EG). The produced polyester-based resin (yield: 87%) had a weight average molecular weight Mw of 53700, a melting point of 83°C, and an enthalpy of fusion of 47 J/g.

### Weight average molecular weight Mw

The weight average molecular weight of each of the polyester-based resins produced in Examples 1 to 6 and Comparative Examples 1 to 3 was determined by GPC (gel permeation chromatography) measurement under the following measurement conditions.

The produced polymer was dissolved in chloroform so that the solid content was about 0.5 mass%, and the solution was filtered through a filter having a pore size of 0.45 µm. The filtrate was used as a measurement sample.
Apparatus: GPC system (available from Agilent Technologies, Inc.)
Elution solvent: chloroform
Standard substance: standard polystyrene (available from Shodex)
Separation column: GPC K-802, GPC K-806M (available from Shodex)

### Melting point, heat of fusion (ΔHm)

The melting point and the heat of fusion (ΔHm) of the polyester-based resin were measured by the following procedure. First, 3 mg of the produced polymer was put in an aluminum sample pan, and the pan was sealed with an aluminum cover. Then, using a differential scanning calorimeter (DSC 8500) available from PerkinElmer, the temperature was increased from -120°C to 140°C at 20°C/min in a helium stream, the peak temperature of an endothermic curve was taken as the melting point, and a value obtained by dividing the area of the curve by the weight of the polymer subjected to the measurement was calculated as the heat of fusion (ΔHm (J/g))*.*

### Biodegradation test sample

A solution obtained by dissolving 5 mg of the polyester-based resin in chloroform was air-dried overnight in a medium bottle for a biodegradation test and vacuum-dried to prepare a sample.

### Marine biodegradability test

Test seawater: seawater obtained by filtering seawater collected in Hojo Beach (north latitude: 34°59'49.794", east longitude: 139°51'23.724"), Tateyama-shi, Chiba, Japan to remove impurities was used.

Mineral stock solution: in accordance with ISO14851:2019, a solution A (8.5 g/L of potassium dihydrogen phosphate; 21.75 g/L of dipotassium hydrogen phosphate; 33.4 g/L of disodium hydrogen phosphate dihydrate; 0.5 g/L of ammonium chloride), a solution B (22.5 g/L of magnesium sulfate heptahydrate), a solution C (36.4 g/L of calcium chloride dihydrate), and a solution D (0.25 g/L of iron(III) chloride hexahydrate) were respectively prepared using pure water.

A biochemical oxygen demand (BOD) biodegradation degree by aerobic microorganisms in seawater was determined by measuring an oxygen consumption amount using a BOD measuring device (OxiTop IDS, available from WTW) in accordance with ISO14851:2019. Specifically, an appropriate amount of test seawater was added to the medium bottle (volume: 0.25 L) in which the biodegradation test sample was prepared, 2 mL of the solution A and 0.2 mL of each of the solutions B, C, and D were added, and the total amount was set to 0.20 L with the test seawater. A solution containing no biodegradation test sample was used as a blank. Five grains of granular sodium hydroxide were added to a carbon dioxide absorbent container, and cultured in a thermostatic chamber set at 25°C for 30 days under an aerobic environment. The seawater in the medium bottle was stirred at from 180 to 450 rpm, and the biodegradation degree (%) based on the BOD measurement at 10 days, 20 days, and 30 days after the start of the test was calculated. The results are shown in Table 1.

**[Table 1]**

| | Molar proportions of charged materials | | | | | Yield % | Mw g/mol | Marine biodegradability (%) | | | **Tm** °C | ΔHm (J/g) |
|---|---|---|---|---|---|---|---|---|---|---|---|---|
| | Succinic acid | Dicarboxylic acid | | EG | 1,4-BD | | | 10 days | 20 days | 30 days | | |
| Example 1 | 0.70 | DDDA | 0.30 | 1.05 | - | 79 | 67700 | 15 | 47 | 61 | 44 | 42 |
| Example 2 | 0.70 | SebA | 0.30 | 1.05 | - | 83 | 62400 | 48 | 70 | 73 | 47 | 29 |
| Example 3 | 0.70 | SubA | 0.30 | 1.05 | - | 82 | 55800 | 29 | 52 | 62 | 49 | 31 |
| Example 4 | 0.85 | DDDA | 0.15 | 1.05 | - | 80 | 56000 | 61 | 69 | 68 | 73 | 41 |
| Example 5 | 0.85 | SebA | 0.15 | 1.05 | - | 78 | 62500 | 20 | 48 | 64 | 72 | 43 |
| Example 6 | 0.95 | SebA | 0.05 | 1.05 | - | 75 | 70700 | 2 | 4 | 7 | 99 | 59 |
| Comparative Example 1 | 1.00 | - | - | 1.05 | - | 87 | 50600 | 1 | 1 | 1 | 99 | 68 |
| Comparative Example 2 | 1.00 | - | - | - | 1.05 | 85 | 61000 | 1 | 1 | 1 | 112 | 65 |
| Comparative Example 3 | 0.85 | AdA | 0.15 | 1.05 | - | 87 | 53700 | 1 | 1 | 6 | 83 | 47 |

Each of the polyester-based resin having a suberic acid (8 carbons) unit (Example 3), the polyester-based resin having a sebacic acid (10 carbons) unit (Examples 2, 5, and 6), and the polyester-based resin having a dodecanedioic acid (12 carbons) unit (Examples 1 and 4) had excellent marine biodegradability.

As shown in Examples 2, 5, and 6, when the amount of the sebacic acid unit was increased, the marine biodegradability was further improved. These results indicate that as the number of the dicarboxylic acid units having 7 or more carbons increases, the crystallinity of the polyester-based resin decreases, and the amorphous phase increases, resulting in an improvement of the marine biodegradability.

In contrast, polyethylene succinate (Comparative Example 1) and polybutylene succinate (Comparative Example 2) were hardly biodegraded in seawater.

Also, the polyester-based resin (Comparative Example 3) having an adipic acid (6 carbons) unit was hardly biodegraded in seawater. These results indicated that even when the polyester-based resin has a dicarboxylic acid unit having 6 or less carbons, the marine biodegradability is not achieved.

## Claims

1. A marine biodegradable polyester-based resin comprising a polymer including a structural unit (A) derived from succinic acid;
a structural unit (B) derived from a dicarboxylic acid having 7 or more carbons; and
a structural unit (C) derived from at least one aliphatic diol selected from the group consisting of ethylene glycol, 1,2-propanediol, and 1,3-propanediol.

2. The marine biodegradable polyester-based resin according to claim 1, wherein the dicarboxylic acid having 7 or more carbons is at least one selected from the group consisting of suberic acid, sebacic acid, and dodecanedioic acid.

3. The marine biodegradable polyester-based resin according to claim 1, wherein, in the polymer, a molar ratio (C-1/C) of a structural unit (C-1) derived from the ethylene glycol to the structural unit (C) is 90/100 or more.

4. The marine biodegradable polyester-based resin according to claim 1, wherein, in the polymer, a molar ratio (B/[A + B + C]) of the structural unit (B) to a total of the structural unit (A), the structural unit (B), and the structural unit (C) is 2/100 or more.

5. The marine biodegradable polyester-based resin according to claim 1, wherein a heat of fusion of the marine biodegradable polyester-based resin measured in accordance with ASTM D3418 is less than 60 J/g.

6. The marine biodegradable polyester-based resin according to claim 1, wherein the structural unit (A) is randomly introduced in the polymer.

7. The marine biodegradable polyester-based resin according to claim 1, wherein at least one selected from the group consisting of the succinic acid, the dicarboxylic acid having 7 or more carbons, and the aliphatic diol is derived from a plant.

8. A method for producing a marine biodegradable polyester-based resin, the method comprising polycondensation of succinic acid,
a dicarboxylic acid having 7 or more carbons, and
at least one aliphatic diol selected from the group consisting of ethylene glycol, 1,2-propanediol, and 1,3-propanediol.
